(19) Europäisches Patentamt
European Patent Office
Office européen des brevets

(11) **EP 4 090 213 B1**

(12) **EUROPÄISCHE PATENTSCHRIFT**

(45) Veröffentlichungstag und Bekanntmachung des Hinweises auf die Patenterteilung:
**31.07.2024 Patentblatt 2024/31**

(21) Anmeldenummer: **20839082.3**

(22) Anmeldetag: **23.12.2020**

(51) Internationale Patentklassifikation (IPC):
**A47L 9/24** *(2006.01)* **A47L 9/28** *(2006.01)*

(52) Gemeinsame Patentklassifikation (CPC):
**A47L 9/24; A47L 9/248; A47L 9/2805; A47L 9/2842; A47L 9/2894**

(86) Internationale Anmeldenummer:
**PCT/EP2020/087733**

(87) Internationale Veröffentlichungsnummer:
**WO 2021/144129 (22.07.2021 Gazette 2021/29)**

(54) **VERFAHREN ZUR STEUERUNG EINES SAUGGERÄTS**

METHOD OF CONTROLLING A SUCTION DEVICE

PROCEDE DE COMMANDE D'UN DISPOSITIF D'ASPIRATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.01.2020 DE 102020200483**

(43) Veröffentlichungstag der Anmeldung:
**23.11.2022 Patentblatt 2022/47**

(73) Patentinhaber: **Robert Bosch GmbH 70442 Stuttgart (DE)**

(72) Erfinder:
• **SCHWILLE, Matthias Christian 72070 Tuebingen (DE)**
• **HERBERGER, Wolfgang 70186 Stuttgart (DE)**

(56) Entgegenhaltungen:
**DE-A1- 102017 115 436 DE-A1- 102017 205 072 US-A1- 2014 008 087**

## Beschreibung

Die vorliegende Erfindung betrifft ein Verfahren zur Steuerung eines Sauggeräts, wobei das Sauggerät zumindest einen Elektromotor zumindest zum Erzeugen einer Saugfunktion umfasst.

Stand der Technik

Nächstliegender Stand der Technik kann in der US 2014/008087 gesehen werden.
Aus der DE 10 2010 040 336 A1 ist bereits ein Verfahren zur Steuerung eines Staubsaugers bekannt.

Offenbarung der Erfindung

Die vorliegende Erfindung geht aus von einem Verfahren zur Steuerung eines Sauggeräts, wobei das Sauggerät zumindest einen Elektromotor zumindest zum Erzeugen einer Saugfunktion umfasst, umfassend zumindest Verfahrensschritte

- Erfassen von Vibrationsdaten an einem Saugschlauch des Sauggeräts,
- Auswerten der Vibrationsdaten durch Vergleichen mit Vergleichsdaten und Erzeugen eines Vergleichsergebnisses,
- Steuern des Elektromotors in Abhängigkeit des Vergleichsergebnisses.

Die Erfindung stellt ein Verfahren bereit, das den Benutzerkomfort steigert, indem es eine Autostart-Funktion für Sauggeräte bereitstellt, unabhängig davon, ob das Sauggerät eine Sauggerätnetzsteckdose am Sauggerätgehäuse aufweist. Die Autostart-Funktion bei netzbetriebenen Sauggeräten mit der Sauggerätnetzsteckdose am Sauggerätgehäuse ist aus dem Stand der Technik hinreichend bekannt. Bei netzbetriebenen Sauggeräten kann eine netzbetriebene Elektrowerkzeugmaschine an die Sauggerätnetzsteckdose angeschlossen werden. Die Autostart-Funktion ermöglicht dem netzbetriebenen Sauggerät ein selbsttätiges Starten, sobald ein lastabhängiger Strom an der Sauggerätnetzsteckdose vorhanden ist. Dieser lastabhängige Strom ist vorhanden, sobald die netzbetriebene Elektrowerkzeugmaschine betrieben wird. Dem Fachmann ist die Funktionsweise der Autostart-Funktion bei netzbetriebenen Sauggeräten mit der Sauggerätnetzsteckdose, insbesondere bei Verwendung der netzbetriebenen Elektrowerkzeugmaschine, hinreichend bekannt, weshalb hier nicht näher darauf eingegangen wird. Im Gegensatz zum Stand der Technik liefert die vorliegende Erfindung die Lösung zur Aufgabe, die Autostart-Funktion für beliebige Werkzeugmaschinen, unabhängig von einer Energieversorgung der Werkzeugmaschine, bereitzustellen. Hierdurch kann die Erfindung die Autostart-Funktion für beispielsweise akkubetriebene, netzbetriebene oder pneumatisch betriebene Werkzeugmaschinen, insbesondere Handwerkzeugmaschinen, bereitstellen. Das erfindungsgemäße Sauggerät ist daher universell mit im Wesentlichen jeder Werkzeugmaschine, insbesondere Handwerkzeugmaschine, einsetzbar. Im Rahmen der vorliegenden Erfindung bedeutet "universell", dass das erfindungsgemäße Sauggerät unabhängig eines Werkzeugmaschinenherstellers und unabhängig von einer bestimmten Energieversorgung der Werkzeugmaschine die Autostart-Funktion bereitstellt. Das erfindungsgemäße Sauggerät ist damit kompatibel und einsetzbar für im Wesentlichen jede Werkzeugmaschine. Das Verfahren steuert in Abhängigkeit des Vergleichsergebnisses der Vibrationsdaten den Elektromotor und stellt damit die Autostart-Funktion für die Werkzeugmaschine bereit.
Insbesondere ermöglicht das erfindungsgemäße Verfahren das Bereitstellen der Autostart-Funktion für beliebige Sauggeräte, sowohl netzgebundene als auch akkubetriebene, in einer Verwendung mit beliebigen Werkzeugmaschinen, insbesondere Handwerkzeugmaschinen, sowohl netzgebundene als auch akkubetriebene. Hierdurch kann herstellerübergreifend die Autostart-Funktion für die beliebigen Sauggeräte bereitgestellt werden.
Im Rahmen der vorliegenden Erfindung soll unter "Steuern des Elektromotors" ein Einschalten des Elektromotors, ein Ausschalten des Elektromotors, ein Regeln einer Leistung des Elektromotors, eine Erhöhung der Leistung des Elektromotors oder ein Reduzieren der Leistung des Elektromotors verstanden werden.
Die Werkzeugmaschine, insbesondere die Handwerkzeugmaschine, erzeugt während ihres Betriebs Vibrationen und erfährt Beschleunigungen. Die Vibrationen und/oder die Beschleunigungen können beispielsweise durch eine Rotation eines Werkzeugmaschinenmotors, eine Bewegung der Werkzeugmaschine, eine zumindest teilweise Drehung der Werkzeugmaschine und/oder eine Bearbeitung eines Werkstückes erzeugt werden. Beispiele für Werkzeugmaschinen sind hierbei eine Tischkreissäge, ein Bandschleifgerät, ein Tischhobel und weitere, dem Fachmann als sinnvoll erscheinende Werkzeugmaschinen. Dabei sind Beispiele für Handwerkzeugmaschinen ein Schrauber, insbesondere ein Akkuschrauber oder ein netzbetriebener Schrauber, ein Drehschlagschrauber, ein Trockenbauschrauber, eine Schlagbohrmaschine, ein Bohrhammer, eine Kernbohrmaschine, ein Winkelschleifer, ein Exzenterschleifer, ein Schwingschleifer, eine Stichsäge, ein Abbruchhammer, eine Handkreissäge, ein Handhobel oder weitere, dem Fachmann hinlänglich bekannte, Handwerkzeugmaschinen. Wenn die Werkzeugmaschine über den Saugschlauch des Sauggeräts mit dem Sauggerät verbunden ist, können die Vibrationen der Werkzeugmaschine auf das Sauggerät übertragen werden.
Bevorzugt handelt es sich bei dem Sauggerät um ein akkubetriebenes Sauggerät, welches mittels zumindest eines Akkus, insbesondere mittels eines Handwerkzeugmaschinenakkupacks, betreibbar ist. Hierdurch findet dann die Bereitstellung einer elektrischen Energie durch eine Energieversorgungseinheit des Sauggeräts mittels des zumindest einen Akkus statt. Im Rahmen der vorliegenden Erfindung soll unter einem "Handwerkzeugmaschinenakkupack" ein Zusammenschluss von zumindest einer Ackuzelle und einem Akkupackgehäuse verstanden werden. Der Handwerkzeugmaschinenakkupack ist vorteilhafter Weise zur Energieversorgung von handelsüblichen akkubetriebenen Handwerkzeugmaschinen ausgebildet. Die zumindest eine Akkuzelle kann beispielsweise als eine Li-Ion-Akkuzelle mit einer Nennspannung von 3,6 V ausgebildet sein. Beispielsweise umfasst der Handwerkzeugmaschinenakkupack zumindest fünf Akkuzellen und eine Gesamtbetriebsnennspannung von 18 V, um einen leistungsgerechten Betrieb des Sauggeräts zu ermöglichen. Alternativ kann es sich bei dem Sauggerät um ein netzbetriebenes Sauggerät handeln, welches mittels einem Stromversorgungskabel an eine externe Netzsteckdose verbindbar ist. Dabei kann die externe Netzsteckdose eine Spannung von beispielsweise 100 V, 110 V, 120 V, 127 V, 220 V, 230 V oder 240 V mit 50 Hz oder 60 Hz bereitstellen, aber auch eine Dreiphasenwechselspannung. Die möglichen Ausgestaltungen der externen Netzsteckdose und die damit verbundenen verfügbaren Spannungen sind dem Fachmann hinlänglich bekannt.

Der Elektromotor erzeugt die Saugfunktion, sobald der Elektromotor mit elektrischer Energie der Energieversorgungseinheit versorgt wird. Wenn der Elektromotor mit elektrischer Energie versorgt ist, kann dieser zumindest einen Saugstrom im Wesentlichen durch das Sauggerätgehäuse erzeugen und hierdurch Partikel und/oder Flüssigkeiten über den Saugschlauch einsaugen. Der Saugschlauch weist zumindest eine Saugöffnung auf und ist vorzugsweise reversibel lösbar am Sauggerätgehäuse anbringbar. Die Saugöffnung ist dazu ausgebildet, mittels des Saugstroms anfallende Partikel während eines Betriebs des Sauggeräts aufzunehmen. Zudem ist der Saugschlauch mit einer Werkzeugmaschine, insbesondere einer Handwerkzeugmaschine, verbindbar, vorzugsweise reversibel lösbar verbindbar. Der Saugschlauch ist dabei dazu ausgebildet, während des Betriebs der Werkzeugmaschine die anfallenden Partikel, insbesondere Schmutzpartikel, über die Saugöffnung von einer Arbeitsfläche, einem Arbeitsbereich oder einem Arbeitsgebiet der Werkzeugmaschine abzutransportieren.

Die eingangs beschriebenen Vibrationen und/oder die Beschleunigungen können beispielhaft durch eine Bewegung des Saugschlauchs, eine zumindest teilweise Drehung des Saugschlauchs, ein Verbinden des Saugschlauchs mit der Werkzeugmaschine, durch eine Rotation des Elektromotors des Sauggeräts oder dergleichen erzeugt werden. Die Vibrationen und/oder die Beschleunigungen werden dabei unmittelbar auf den am Saugschlauch angeordneten Sensormodul übertragen und von diesem erfasst. Die Vibrationen können beispielsweise als ein ein-, zwei- oder dreikomponentiger Vektor dargestellt werden, sodass die Vibrationen beispielsweise ein, zwei oder drei Raumrichtungen umfassen.

Damit das Sensormodul die Vibrationsdaten erfassen kann, ist das Sensormodul dem Saugschlauch zugeordnet. Hierbei ist das Sensormodul vorzugsweise an einem Endbereich des Saugschlauchs angeordnet, insbesondere angebracht, der vom Sauggerät abgewandt ist. Besonders bevorzugt ist das Sensormodul in der Nähe der Saugöffnung angeordnet. Das Sensormodul kann auf dem Saugschlauch angebracht sein und mit diesem mechanisch verbunden sein. Im Rahmen der vorliegenden Erfindung bedeutet "mechanisch verbunden", dass es sich um eine kraft-, form- und/oder stoffschlüssige Verbindung handelt, wobei diese lösbar oder unlösbar ausgestaltet sein kann.

In einem Verfahrensschritt werden Vibrationsdaten an dem Saugschlauch des Sauggeräts erfasst. Zur Erfassung der Vibrationsdaten kann der Saugschlauch zumindest ein Sensormodul zur Erfassung von Vibrationen und/oder Beschleunigungen aufweisen. Das Sensormodul kann dabei die Vibrationen und/oder die Beschleunigungen der Werkzeugmaschine, insbesondere der Handwerkzeugmaschine, und/oder die Vibrationen und/oder die Beschleunigungen des Saugschlauchs erfassen. Das Sensormodul kann als zumindest ein Beschleunigungssensor ausgebildet sein, welcher die Vibrationen während des Betriebs der Werkzeugmaschine und/oder des Sauggeräts erfasst. Der Beschleunigungssensor kann beispielshaft als ein Gyroskop, ein Kompass oder ein Magnetfeldsensor ausgebildet sein. Dabei kann das Sensormodul im Wesentlichen Vibrationswerte und/oder Beschleunigungswerte von bis zu drei Raumrichtungen erfassen. Das Sensormodul kann einen Mikrocontroller oder einen Mikroprozessor zur Auswertung der Vibrationsdaten umfassen. Das Sensormodul ist dazu vorgesehen, die Vibrationen und/oder die Beschleunigungen der Werkzeugmaschine und/oder des Sauggeräts zu erfassen und in die Vibrationsdaten umzuwandeln. Die Vibrationsdaten können hierbei als dreikomponentige Vektoren für unterschiedliche Zeitpunkte dargestellt werden. So können die Vibrationsdaten als eine zeitabhängige Datenfolge für verschiedene Zeitpunkte mit ein, zwei oder drei Komponenten für ein, zwei oder drei Raumrichtungen sein. Das Sensormodul ist derart ausgebildet, dass es die dreikomponentigen Vibrationen am Saugschlauch in dreikomponentige Vibrationsdaten übersetzen kann. Zudem ist das Sensormodul dazu ausgebildet, die Vibrationen kontinuierlich zu erfassen, sodass die Vibrationen kontinuierlich in die Vibrationsdaten übersetzt werden. Es ist auch denkbar, dass das Sensormodul die Vibrationen in, insbesondere einstellbaren, Zeitabständen erfasst und in die Vibrationsdaten übersetzt. Die Vibrationsdaten können als ein Vibrationsspektrum erfasst werden, wobei die Vibrationsdaten für jeweils eine Raumrichtung zeitabhängig ausgewertet werden können. Das Vibrationsspektrum kann hierdurch als ein zeitlicher Verlauf der Vibrationen über die Zeitachse aufgefasst werden.

In einem Verfahrensschritt werden die erfassten Vibrationsdaten oder das Vergleichsergebnis unter Verwendung einer Kommunikationsverbindung von dem Saugschlauch zu dem Sauggerät übermittelt. So können beispielsweise die erfassten Vibrationsdaten von dem Sensormodul über die Kommunikationsverbindung an das Sauggerät übermittelt werden, sodass das Sauggerät die Auswertung der erfassten Vibrationsdaten durchführt. Denkbar ist beispielhaft auch, dass das Sensormodul die Auswertung der erfassten Vibrationsdaten durchführt und das Vergleichsergebnis an das Sauggerät über die Kommunikationsverbindung übermittelt wird. Die Kommunikationsverbindung kann leitungsgebunden sein, insbesondere mittels einer Kommunikationsleitung zwischen dem Sensormodul und dem Sauggerät. Dabei kann beispielsweise die Kommunikationsleitung ein Kommunikationskabel oder zumindest eine Leiterbahn auf zumindest einer Leiterplatine sein. Die Kommunikationsverbindung verbindet dann das Sensormodul über zumindest eine Kommunikationsschnittstelle mit dem Sauggerät, sodass zumindest ein einseitiger Kommunikationsfluss stattfinden kann, wobei auch zumindest ein zweiseitiger Kommunikationsfluss möglich wäre. Im Rahmen der vorliegenden Erfindung bedeutet "einseitiger Kommunikationsfluss", dass zumindest ein Kommunikationssignal von dem Sensormodul zum Sauggerät übermittelt werden kann und im Wesentlichen keine Kommunikation von dem Sauggerät zum Sensormodul vorhanden ist. Als "zweiseitiger Kommunikationsfluss" soll eine bidirektionale Kommunikation zwischen dem Sensormodul und dem Sauggerät verstanden werden, sodass sowohl zumindest ein Kommunikationssignal von dem Sensormodul zum Sauggerät übermittelt werden kann, als auch zumindest ein weiteres Kommunikationssignal von dem Sauggerät zum Sensormodul übertragen werden kann. Zudem ist es möglich, dass die Kommunikationsverbindung zwischen dem Sensormodul und dem Sauggerät drahtlos ausgebildet ist. Die drahtlose Kommunikationsverbindung kann dabei in Form von Bluetooth, WLAN, Infrarot, Nahfeldkommunikation (NFC) mittels RFID-Technik sein, als auch weitere, dem Fachmann geläufige, drahtlose Kommunikationsverbindungen sein. Verwendete Kommunikationsprotokolle können hierbei Bluetooth Smart, GSM, UMTS, LTE, ANT, ZigBee, LoRa, SigFox, NB-loT, BLE, IrDA sein, als auch weitere, dem Fachmann geläufige, Kommunikationsprotokolle.

Das Sensormodul weist eine Sensormodulenergieversorgung auf, die dazu ausgebildet ist, das Sensormodul mit elektrischer Energie zu versorgen. Hierbei kann die Sensormodulenergieversorgung mittels einer Energieversorgungsleitung mit dem Sauggerät verbunden sein, sodass die Sensormodulenergieversorgung über das Sauggerät mit elektrischer Energie versorgt wird. Möglich ist auch, dass die Sensormodulenergieversorgung über die Energieversorgung der Werkzeugmaschine, insbesondere Handwerkzeugmaschine, wie beispielsweise des Akkus, insbesondere des Handwerkzeugmaschinenakkupacks, mit elektrischer Energie versorgt wird. Denkbar ist auch, dass die Sensormodulenergieversorgung über zumindest eine Batterie, insbesondere zumindest eine Knopfzelle, über zumindest einen Akku mit elektrischer Energie versorgt wird oder mittels Energy Harvesting. Die Ausgestaltung der Sensormodulenergieversorgung mittels der Batterie, des Akkus oder Energy Harvesting sind dem Fachmann hinreichend bekannt, weshalb hier nicht näher darauf eingegangen wird.

In einem Verfahrensschritt werden die Vibrationsdaten ausgewertet, indem die Vibrationsdaten mit den Vergleichsdaten verglichen werden. Anschließend wird das Vergleichsergebnis erzeugt. Die Vibrationsdaten können unter Verwendung des Sensormoduls mit den Vergleichsdaten verglichen werden. Es ist auch möglich, dass die Vibrationsdaten unter Verwendung einer Steuereinheit des Sauggeräts mit den Vergleichsdaten verglichen werden. Hierzu weist das Sauggerät die Steuereinheit auf. Die Steuereinheit ist dazu vorgesehen, zumindest das Sauggerät, insbesondere den Elektromotor, zu steuern. Weiter kann die Steuereinheit die Vibrationsdaten mit den Vergleichsdaten vergleichen. Die Steuereinheit kann beispielhaft als ein Mikrocontroller und/oder als ein Mikroprozessor ausgebildet sein. Die Vergleichsdaten können von einem Benutzer einstellbar und/oder herstellerseitig vorgegeben sein. Beispielsweise können die Vergleichsdaten Frequenzen eines Bandpassfilters oder vorgebbare und/oder einstellbare Sättigungsbereiche eines Sättigungsfilters sein. Eine Funktionsweise des Sättigungsfilters kann als eine mathematische Funktion, einer Sättigungsfunktion, wiedergegeben werden

$$f(x) = \begin{cases} \max & \text{für } x > \max \\ x & \text{für } \min \leq x \leq \max \\ \min & \text{für } x < \min \end{cases}$$

Die Vergleichsdaten können geräteintern und/oder geräteextern abgelegt sein. Geräteintern kann hierbei beispielhaft als auf dem Sensormodul des Sauggeräts, auf einer Speichereinheit des Sauggeräts oder in der Steuereinheit des Sauggeräts aufgefasst werden. Geräteextern kann hier als im Wesentlichen außerhalb des Sauggeräts, wie beispielsweise auf einem Smartphone, auf einem PC, auf einer Cloud oder dergleichen, aufgefasst werden. Beim Vergleichen der Vibrationsdaten mit den Vergleichsdaten kann überprüft werden, ob von einem Betrag der Vibrationsdaten her die Vibrationsdaten oberhalb oder unterhalb einer vorgebbaren und/oder einstellbaren Schwelle der Vergleichsdaten liegen.

Nach dem Vergleichen der Vibrationsdaten mit den Vergleichsdaten wird das Vergleichsergebnis erzeugt. Hierbei kann beispielsweise das Sensormodul und/oder die Steuereinheit das Vergleichsergebnis erzeugen.

In einem Verfahrensschritt wird der Elektromotor in Abhängigkeit des Vergleichsergebnisses gesteuert. Hierbei kann die Steuereinheit anhand des erzeugten Vergleichsergebnisses den Elektromotor steuern. Dabei kann das Vergleichsergebnis eine Information darüber enthalten, dass der Elektromotor gestartet, gestoppt oder weiterhin betrieben werden soll. So umfasst das Steuern des Elektromotors, wie oben beschrieben, ein Starten, ein Stoppen, ein weiterhin Betreiben des Elektromotors oder eine Leistungsanpassung des Elektromotors. So kann beispielsweise das Vergleichsergebnis ein Startsignal, ein Stoppsignal oder ein Signal zum weiteren Betrieb des Elektromotors umfassen. Hierbei ist das Vergleichsergebnis abhängig eines Ergebnisses des Vergleichs der Vibrationsdaten mit den Vergleichsdaten.

Das Vergleichsergebnis kann zudem eine Information zu einem Steuerzeitpunkt des Elektromotors umfassen. Hierdurch kann der Elektromotor derart gesteuert werden, dass der Elektromotor dann angeschaltet wird, wenn die Werkzeugmaschine in Betrieb genommen wird. Zudem ist es möglich, dass der Steuerzeitpunkt einen Zeitpunkt zum Stoppen des Elektromotors umfasst, sobald die Werkzeugmaschine stoppt. Weiter ist es möglich, dass das Vergleichsergebnis eine Einschalt- und/oder eine Ausschaltverzögerung für den Elektromotor umfasst.

In einem Verfahrensschritt werden die Vibrationsdaten mit einer Frequenz zumindest eines Signalfilters zum Herausfiltern von Erdbeschleunigungsanteilen in den Vibrationsdaten gefiltert. Der Signalfilter kann als zumindest ein Hochpassfilter, ein Bandpassfilter, ein Bandstopp oder ein Tiefpassfilter ausgebildet sein, wobei bevorzugt der Bandpassfilter verwendet werden kann. Die Vibrationsdaten umfassen neben den Vibrationen und/oder den Beschleunigungen der Werkzeugmaschine und/oder des Sauggeräts, auch die Erdbeschleunigungsanteile. Damit die Vibrationsdaten von den Erdbeschleunigungsanteilen bereinigt werden können, werden die Vibrationsdaten mittels des Signalfilters, insbesondere Bandpassfilter, gefiltert. Hierdurch wird ermöglicht, dass die Vibrationsdaten unabhängig des Gravitationsfelds der Erde werden. Zudem wird ermöglicht, dass die Vibrationsdaten unabhängig einer Orientierung des Sensormoduls im Gravitationsfeld der Erde werden.

Es ist denkbar, dass jeweils ein Signalfilter, insbesondere Bandpassfilter, für jeweils eine Komponente der Vibrationsdaten vorgesehen ist oder aber ein Signalfilter, insbesondere Bandpassfilter, für die dreikomponentigen Vibrationsdaten. Der Signalfilter, insbesondere Bandpassfilter, kann beispielsweise eine Filterausprägung nach Butterworth aufweisen. Zudem kann der Signalfilter, insbesondere Bandpassfilter, eine Filterordnung von zumindest eins, insbesondere zwei, mit der Frequenz, insbesondere einer Grenzfrequenz, im Bereich von beispielsweise 100 Hz bis 200 Hz umfassen. Dabei kann beispielsweise der Bandpassfilter eine Filtercharakteristik nach Tschebyscheff, Bessel, Cauer und weitere dem Fachmann bekannte Filtercharakteristiken aufweisen. Zudem kann beispielhaft die Filterordnung von eins aufsteigend sein. Die Frequenz des Bandpassfilters kann von einem Benutzer einstellbar sein oder aber herstellerseitig vordefiniert sein. Weiter ist denkbar, dass der Bandpassfilter ein digitaler oder ein analoger Filter ist.

Wenn die Vibrationsdaten mit der Frequenz des Signalfilters, insbesondere Bandpassfilters, gefiltert werden, können anschließend gefilterte Vibrationsdaten ausgegeben werden. Denkbar ist, dass die gefilterten Vibrationsdaten einem weiteren Vergleich zur Verfügung gestellt werden oder aber in einer Ausführungsform das Vergleichsergebnis darstellen.

In einem Verfahrensschritt wird eine Vektorsumme der Vibrationsdaten zur Ermittlung einkomponentiger Vibrationsdaten gebildet. Typischerweise sind die Vibrationsdaten als dreikomponentige Vibrationsdaten unter Verwendung des Sensormoduls erfasst. Die dreikomponentigen Vibrationsdaten bilden hierbei die drei Raumrichtungen ab. Um die Vibrationsdaten unabhängig einer Raumrichtung zu ermitteln, wird die Vektorsumme der dreikomponentigen Vibrationsdaten gebildet. Hierdurch werden die einkomponentigen Vibrationsdaten ermittelt, wobei die einkomponentigen Vibrationsdaten unabhängig einer Lage des Saugschlauchs in einer Arbeitsumgebung, einer Orientierung des Saugschlauchs in einer Arbeitsumgebung, einer Orientierung der Werkzeugmaschine, insbesondere Handwerkzeugmaschine, in einer Arbeitsumgebung, eines Anschlusses des Saugschlauchs an der Werkzeugmaschine, einer Orientierung des Anschlusses des Saugschlauchs an der Werkzeugmaschine, einer Art und einer Funktionsweise der Werkzeugmaschine sind. Die dreikomponentigen Vibrationsdaten werden für ihre Raumrichtungen vektoriell addiert, um eine orientierungsunabhängige Summenbildung zu erzielen. Dies bedeutet, dass das Vibrationsspektrum der drei Raumrichtungen vektoriell addiert wird, um ein eindimensionales Vibrationsspektrum zu erhalten. Es ist möglich, dass die Vektorsumme der dreikomponentigen Vibrationsdaten unter Verwendung des Sensormoduls und/oder der Steuereinheit ermittelt wird.

Die einkomponentigen Vibrationsdaten können mit zumindest einem vorgebbaren und/oder herstellerseitig definierten Schwellwert für die einkomponentigen Vibrationsdaten verglichen werden. Der vorgebbare und/oder herstellerseitig definierte Schwellwert kann hier die Vergleichsdaten darstellen. Falls die Vektorsumme beispielsweise oberhalb des Schwellwerts liegen, kann als das Vergleichsergebnis ein Startsignal für den Elektromotor ausgegeben werden. Falls die Vektorsumme beispielsweise unterhalb des Schwellwerts liegt, kann ein Stoppsignal für den Elektromotor ausgegeben werden.

Alternativ ist auch denkbar, dass bei nachfolgenden Verfahrensschritten keine Vektorsumme aus den dreikomponentigen Vibrationsdaten gebildet wird, sondern jede Raumrichtung separat mit den zugehörigen Vibrationsdaten ausgewertet wird.

In einem Verfahrensschritt wird beim Vergleichen der Vibrationsdaten mit den Vergleichsdaten überprüft, ob die Vibrationsdaten innerhalb einer einstellbaren Anzahl an aufeinanderfolgenden einstellbaren Intervallbreiten die Vergleichsdaten zumindest einmalig überschreiten. Mit Hilfe der einstellbaren Intervallbreiten für die Vibrationsdaten kann ermittelt, insbesondere gezählt, werden, wie oft die erfassten Vibrationsdaten für aufeinanderfolgende, insbesondere konsekutiver, Intervallbreiten die Vergleichsdaten überschreiten. Diese ermittelte, insbesondere gezählte, Anzahl an Überschreitungen der Vibrationsdaten kann dann zur Erzeugung des Vergleichsergebnisses verwendet werden. Hierbei kann die Intervallbreite der Vibrationsdaten eine einstellbare Breite eines Intervalls in dem Vibrationsspektrum sein. Dies bedeutet, dass die Intervallbreite ein einstellbarer Ausschnitt des eindimensionalen Vibrationsspektrums sein kann.

In einem Verfahrensschritt werden die, insbesondere einkomponentigen, Vibrationsdaten mit einem einstellbaren Sättigungsbereich eines Sättigungsfilters zur Filterung der Vibrationsdaten nach Vibrationsspitzen gefiltert. Die Vibrationsdaten können die Vibrationsspitzen umfassen. Die Vibrationsspitzen können beispielsweise aufgrund zumindest eines Schlags auf den Saugschlauch, auf das Sauggerät und/oder auf die Werkzeugmaschine entstehen. Zudem können die Vibrationsspitzen beispielhaft aufgrund von Erschütterungen einer Arbeitsfläche entstehen, die sich auf das Sauggerät und/oder die Werkzeugmaschine übertragen. Die Vibrationsspitzen werden aus den Vibrationsdaten gefiltert, um zu vermeiden, dass die Vibrationsspitzen zum Steuern des Elektromotors führen. Hierbei können die Vibrationsspitzen beispielhaft als Fehler in den Vibrationsdaten aufgefasst werden, die die Vibrationsdaten verfälschen. Die Vibrationsspitzen geben im Wesentlichen keine eindeutige Information darüber, dass der Benutzer die Werkzeugmaschine verwendet.

Die Vibrationsdaten können unter Verwendung des Sensormoduls und/oder der Steuereinheit mit dem einstellbaren Sättigungsbereich zur Filterung der Vibrationsspitzen verglichen werden. Der Sättigungsbereich kann durch den Benutzer einstellbar sein oder aber herstellerseitig vorgegeben sein. Beispielhaft kann der Sättigungsbereich in einem Bereich von 0,5 g bis 2 g, insbesondere 0,7 g bis 0,95 g, sein.

In einem Verfahrensschritt wird ein gleitendes Maximum für zumindest eine der einstellbaren Intervallbreiten für die Vibrationsdaten zur Ermittlung des Vergleichsergebnisses ermittelt. Das gleitende Maximum kann unter Verwendung des Sensormoduls und/oder der Steuereinheit ermittelt werden. Das gleitende Maximum kann hierbei ein Festlegen der einstellbaren Intervallbreite umfassen. Weiter kann das gleitende Maximum ein Auffinden eines Maximums für die festgelegte, einstellbare Intervallbreite umfassen. Das gleitende Maximum kann ein Ausgeben des aufgefundenen Maximums in der festgelegten, einstellbaren Intervallbreite umfassen. Das aufgefundene Maximum innerhalb der festgelegten Intervallbreite wird für eine Zeitdauer der eingestellten Intervallbreite als das Vergleichsergebnis ausgegeben. Die Intervallbreite des gleitenden Maximums stellt hierbei ein Einstellparameter für eine Empfindlichkeit zum Steuern des Elektromotors dar. Dies bedeutet, umso geringer die Intervallbreite gewählt wird, umso schneller wird ein Vergleichsergebnis ausgegeben und umso schneller kann der Elektromotor gesteuert werden. Hierdurch kann überprüft werden, ob der Schwellwert für das Vergleichsergebnis kontinuierlich erreicht wird. Das gleitende Maximum kann als eine obere Einhüllende der Vibrationsdaten aufgefasst werden.

Beispielhaft kann die einstellbare Intervallbreite im Bereich von 0,01 s bis 0,05 s, insbesondere von 0,015 s bis 0,03 s, sein. Die Intervallbreite kann durch den Benutzer einstellbar sein oder aber herstellerseitig vorgegeben sein.

In einem Verfahrensschritt wird eine zeitliche Änderung des gleitenden Maximums der Vibrationsdaten zur Überprüfung des Vergleichsergebnisses ermittelt. Die zeitliche Änderung des gleitenden Maximums kann unter Verwendung des Sensormoduls und/oder der Steuereinheit ermittelt werden. Die zeitliche Änderung des gleitenden Maximums wird für zumindest zwei aufeinanderfolgende Intervallbreiten des gleitenden Maximums gebildet. Hierdurch wird überprüft, ob das Vergleichsergebnis kontinuierlich den Schwellwert für das Vergleichsergebnis erfüllt, wodurch eine Genauigkeit der Steuerung des Elektromotors erhöht wird.

In einem Verfahrensschritt wird eine Häufigkeit der zeitlichen Änderung des gleitenden Maximums der Vibrationsdaten unter Verwendung eines gleitenden Mittelwertfilters zur weiteren Überprüfung des Vergleichsergebnisses ermittelt. Die Häufigkeit kann unter Verwendung des Sensormoduls und/oder der Steuereinheit ermittelt werden. Anhand der Ermittlung der Häufigkeit der zeitlichen Änderung kann gezählt werden, wie oft sich das gleitende Maximum ändert. Wenn innerhalb der einstellbaren Anzahl an Intervallbreiten ermittelt wird, dass im Wesentlichen keine zeitliche Änderung aufgetreten ist, wird das Vergleichsergebnis zur Steuerung des Elektromotors ausgegeben. Wenn innerhalb der einstellbaren Anzahl an Intervallbreiten ermittelt wird, dass die zeitlichen Änderungen auftreten, wird im Wesentlichen kein Vergleichsergebnis ausgegeben. Hierdurch wird ermöglicht, dass ein sicheres und zuverlässiges Steuern des Elektromotors erreicht werden kann.

Beispielsweise kann ein Faktor für eine Intervallbreite des gleitenden Mittelwertfilters zur Intervallbreite des gleitenden Maximums im Bereich von 1 bis 9, insbesondere von 3 bis 8, sein. Je geringer die Intervallbreite des gleitenden Mittelwertfilters gewählt wird, desto schneller wird das Sauggerät nach einem Start der Werkzeugmaschine gestartet.

Es ist auch denkbar, dass bei einer ersten Ermittlung der zeitlichen Änderung des gleitenden Maximums eine interne Zeitfunktion aktiviert wird, die eine Zeitspanne vorgibt, wann der Elektromotor gesteuert werden soll. Die interne Zeitfunktion kann unter Verwendung des Sensormoduls und/oder der Steuereinheit aktiviert werden. Die interne Zeitfunktion kann dabei eine Funktion des Sensormoduls und/oder der Steuereinheit sein.

In einem Verfahrensschritt wird das gleitende Maximum für die einstellbare Anzahl der einstellbaren Intervallbreiten ermittelt und mit einem einstellbaren Schwellwert zur Ermittlung des Vergleichsergebnisses verglichen. Hierbei ermittelt das Sensormodul und/oder die Steuereinheit, wie häufig das gleitende Maximum in der einstellbaren Intervallbreite auftritt. Anschließend vergleicht das Sensormodul und/oder die Steuereinheit die ermittelte Anzahl mit dem einstellbaren Schwellwert, ob der einstellbare Schwellwert erreicht wurde. Abhängig des Vergleichs wird das Vergleichsergebnis ausgegeben. Dabei kann beispielsweise die einstellbare Anzahl der einstellbaren Intervallbreiten im Bereich von 1 bis 9, insbesondere 3 bis 8, betragen. Die Anzahl der einstellbaren Intervallbreiten kann durch den Benutzer einstellbar sein oder aber herstellerseitig vorgegeben sein.

In einem Verfahrensschritt wird der Elektromotor für eine Nachlaufzeitspanne in Abhängigkeit des Vergleichsergebnisses betrieben. Die einstellbare Nachlaufzeitspanne ermöglicht ein Nachlaufen des Elektromotors, wenn keine Vibrationsdaten durch das Sensormodul erfasst werden. Dabei kann das Sensormodul und/oder die Steuereinheit das Vergleichsergebnis ausgeben, sodass der Elektromotor weiterhin betrieben wird. Dies ermöglicht, dass der Elektromotor weiter angetrieben wird, wenn nach Ende von Arbeiten mit der Werkzeugmaschine noch vorhandene Partikel abgesaugt werden sollen. Zudem ermöglicht die Nachlaufzeitspanne des Elektromotors, dass fehlerhaft erfasste Vibrationsdaten im Wesentlichen korrigiert werden, indem der Elektromotor während der Nachlaufzeitspanne betrieben wird. Hierdurch wird ermöglicht, dass ein von dem Benutzer ungewolltes Ausschalten des Elektromotors verhindert wird. Weiter ermöglicht die Nachlaufzeitspanne des Elektromotors, dass ein mehrfaches Steuern des Elektromotors während eines einzelnen Arbeitsvorgangs des Benutzers verhindert wird.

Die Nachlaufzeitspanne kann von dem Benutzer an dem Sauggerät und/oder an einem externen elektrischen Gerät einstellbar sein oder aber herstellerseitig vorgegeben sein. Beispielsweise kann die Nachlaufzeitspanne in einem Bereich von 0,1 s bis 5 s, insbesondere 0,5 s bis 3 s, sein. Dabei kann der Benutzer die Nachlaufzeitspanne mittels einer Benutzerschnittstelle an dem Sauggerät einstellen. Denkbar ist auch, dass der Benutzer mittels dem externen elektrischen Gerät, wie beispielsweise einem Smartphone, einer Cloud-basierten Schnittstelle, einem PC oder dergleichen, die Nachlaufzeitspanne einstellen kann.

Die Erfindung schlägt auch ein Sensormodul zum Durchführen des Verfahrens, wie oben beschrieben, vor, wobei das Sensormodul dazu ausgebildet ist, Vibrationsdaten zu erfassen.

Die Erfindung betrifft auch ein Sauggerät zum Durchführen des Verfahrens, wie oben beschrieben, mit einem Saugschlauch, wobei der Saugschlauch zumindest ein Sensormodul zur Erfassung von Vibrationsdaten umfasst, und mit einer Steuereinheit, wobei die Steuereinheit dazu ausgebildet ist, zumindest einen der oben beschriebenen Verfahrensschritte durchzuführen. Hierbei sind der Saugschlauch, das Sensormodul und die Steuereinheit wie eingangs beschrieben.

Kurze Beschreibung der Zeichnungen

Die Erfindung wird nachfolgend anhand von einer bevorzugten Ausführungsform erläutert. Die Zeichnungen im Folgenden zeigen:

Fig. 1    eine schematische Ansicht eines erfindungsgemäßen Sauggeräts;

Fig. 2    ein Ablaufdiagramm eines Verfahrens zur Steuerung des Sauggeräts;

Beschreibung des Ausführungsbeispiels

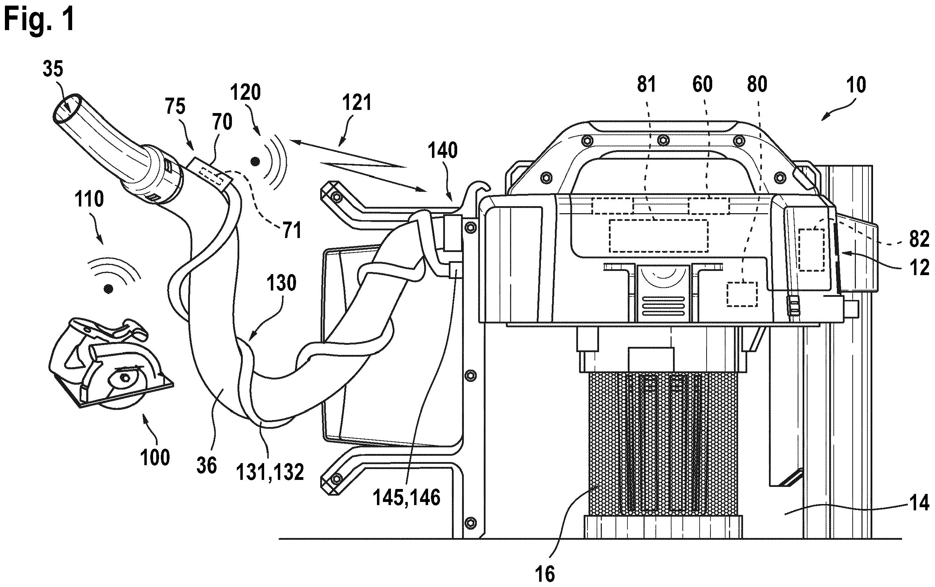

Fig. 1 zeigt ein erfindungsgemäßes Sauggerät 10 mit einem Sauggerätgehäuse 12 und mit einem Saugschlauch 36. In dieser Ausgestaltung der Erfindung ist der Saugschlauch 36 lösbar an dem Sauggerätgehäuse 12 anbringbar. Zudem weist das Sauggerät 10 ein Sensormodul 70 auf. Das Sensormodul 70 ist an dem Saugschlauch 36 angeordnet. Das Sensormodul erfasst Vibrationen 110 einer Werkzeugmaschine 100, insbesondere einer Handwerkzeugmaschine, und des Sauggeräts 10. Das Sensormodul 70 ist hier als ein Beschleunigungssensor 71 ausgebildet. Der Beschleunigungssensor 71 erfasst die Vibrationen 110 in bis zu drei Raumrichtungen und wandelt die Vibrationen 110 in Vibrationsdaten 120 um. Hierbei umfassen die Vibrationsdaten 120 jeweils eine Komponente für jeweils eine Raumrichtung für verschiedene Zeitpunkte. Das Sensormodul 70 stellt eine Kommunikationsverbindung 121 mit dem Sauggerät 10 bereit und übermittelt die Vibrationsdaten 120 an das Sauggerät. In dieser Ausgestaltung ist die Werkzeugmaschine 100 als eine beispielhafte Handkreissäge dargestellt.

Das Sauggerät 10 weist einen Elektromotor 80 zum Erzeugen einer Saugfunktion, eine Energieversorgungseinheit 81, eine Staubsammelvorrichtung 14 und ein Staubsammelfilterelement 16 auf. Hierbei umfasst das Sauggerätgehäuse 12 die Staubsammelvorrichtung 14. Das Sauggerät 10 umfasst zusätzlich eine Steuereinheit 60, die dazu ausgebildet ist, die Vibrationsdaten 120 zu verarbeiten und das Sauggerät 10 zu steuern und/oder zu regeln.

In dieser Ausführungsform ist das Sauggerät 10 als ein akkubetriebenes Sauggerät ausgebildet, welches mittels zumindest eines Akkus 82, insbesondere mittels eines Handwerkzeugmaschinenakkupacks, betrieben wird. Somit wird die benötigte Energie für das Sauggerät 10 durch die Energieversorgungseinheit 81 mittels des zumindest einen Akkus 82 bereitgestellt.

Der Saugschlauch 36 umfasst eine Saugöffnung 35 und ist lösbar am Sauggerätgehäuse 12 anbringbar. Die Saugöffnung 35 ist dazu eingerichtet, anfallende Partikel, insbesondere Schmutzpartikel, während des Betriebs des Sauggeräts 10 aufzunehmen und mittels des Saugschlauchs 36 zur Staubsammelvorrichtung 14 weiterzuleiten. Der Saugschlauch 36 ist mit der Werkzeugmaschine 100, insbesondere der Handwerkzeugmaschine, lösbar verbindbar. Der Saugschlauch 36 umfasst das Sensormodul 70, wobei das Sensormodul 70 an einem Endbereich 75 des Saugschlauchs 36 angebracht ist und damit mechanisch verbunden.

Das Sauggerät 10 ist mit dem Sensormodul 70 leitungsgebunden. Hierzu weist der Saugschlauch 36 eine Leitung 130 zur Leitungsbindung zwischen dem Sauggerät 10 und dem Sensormodul 70 auf. Die Leitung 130 umfasst in dieser Ausführungsform eine Kommunikationsleitung 131 und eine Energieversorgungsleitung 132. Die Kommunikationsleitung 131 übermittelt die Vibrationsdaten 120 zwischen dem Sensormodul 70 und dem Sauggerät 10. Die Energieversorgungsleitung 132 verbindet das Sensormodul 70 mit dem Sauggerät 10, sodass das Sensormodul 70 mit Energie versorgt wird.

Das Sauggerätgehäuse 12 umfasst eine mechanische Schnittstelle 140 und eine Kommunikationsschnittstelle 145. Die mechanische Schnittstelle 140 ist dazu ausgebildet, den Saugschlauch 36 lösbar mit dem Sauggerätgehäuse 12 zu verbinden. Dies erfolgt im Wesentlichen mittels einer kraft- und/oder formschlüssigen Verbindung. Die Kommunikationsschnittstelle 145 ist dazu vorgesehen, das Sensormodul 70 mit dem Sauggerät 10 zu verbinden. Die Kommunikationsschnittstelle 145 verbindet das Sensormodul 70 mittels der Kommunikationsleitung 131 mit dem Sauggerät 10. In dieser Ausführungsform ist die Kommunikationsleitung 131 lösbar mit der Kommunikationsschnittstelle 145 über eine Steckverbindung verbunden. Zusätzlich ist die Kommunikationsschnittstelle 145 eine Energieversorgungsschnittstelle 146 für die Energieversorgungsleitung 132. Die Energieversorgungsschnittstelle 146 verbindet das Sensormodul 70 über die Energieversorgungsleitung 132 mit der Energieversorgungseinheit 81.

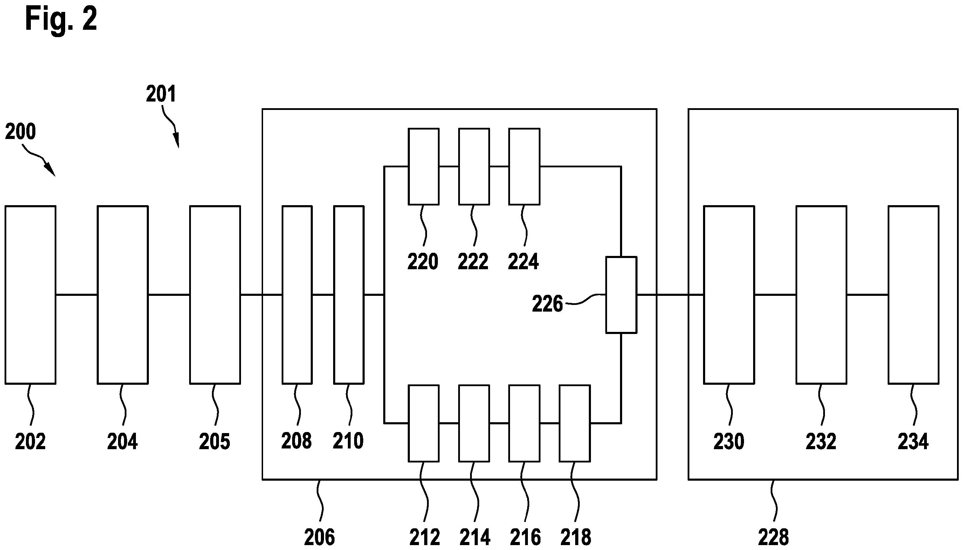

Fig. 2 zeigt ein Ablaufdiagramm 201 eines erfindungsgemäßen Verfahrens 200 zur Steuerung des Sauggeräts 10. Das Sauggerät 10 weist den Elektromotor 80 zum Erzeugen der Saugfunktion auf. In einem Verfahrensschritt 202 wird eine Autostart-Funktion des Sauggeräts 10 durch einen Benutzer aktiviert. Hierdurch wird das Sauggerät 10 in einen betriebsbereiten Zustand versetzt.

Die Vibrationsdaten 120 werden in einem Verfahrensschritt 204 an dem Saugschlauch 36 erfasst. Das Sensormodul 70 erfasst die Vibrationen 110 und wandelt die Vibrationen 110 in die Vibrationsdaten 120 um. Die Vibrationsdaten 120 umfassen im Wesentlichen Vibrationswerte und/oder Beschleunigungswerte von den bis zu drei Raumrichtungen, sodass die Vibrationsdaten 120 dreikomponentige Vektoren für unterschiedliche Zeitpunkte darstellen. Die Vibrationsdaten 120 werden in einem Vibrationsspektrum dargestellt, wobei die Vibrationen mit ihren Amplituden über jeweils eine Raumrichtung über eine Zeitachse aufgetragen werden.

Die erfassten Vibrationsdaten 120 werden in einem Verfahrensschritt 205 dieser Ausführungsform unter Verwendung der Kommunikationsverbindung 121 von dem Saugschlauch 36 zu dem Sauggerät 10 übermittelt. In einem nachfolgenden Verfahrensschritt 206 werden die Vibrationsdaten 120 ausgewertet, indem die Vibrationsdaten 120 mit Vergleichsdaten verglichen werden. Zudem wird das Vergleichsergebnis erzeugt. Hier werden die Vibrationsdaten 120 unter Verwendung der Steuereinheit 60 mit den Vergleichsdaten verglichen. Die Vergleichsdaten können beispielhaft Frequenzen eines Signalfilters und vorgebbare Sättigungsbereiche eines Sättigungsfilters sein. Hier sind die Vergleichsdaten geräteintern auf einer Speichereinheit der Steuereinheit 60 abgespeichert. Die Vibrationsdaten 120 werden in dem Verfahrensschritt 206 mit den Vergleichsdaten verglichen und es wird überprüft, ob die Vibrationsdaten innerhalb oder außerhalb einer vorgebbaren Schwelle der Vergleichsdaten liegen. Anhand dieses Vergleichs wird das Vergleichsergebnis erzeugt.

Der Verfahrensschritt 206 umfasst einen Verfahrensschritt 208. Die Vibrationsdaten 120 werden in dem Verfahrensschritt 208 mit einer Frequenz eines Signalfilters zum Herausfiltern des Erdbeschleunigungsanteils in den Vibrationsdaten 120 gefiltert. Hier ist der Signalfilter als ein Bandpassfilter ausgebildet. Die Vibrationsdaten 120 werden von den Erdbeschleunigungsanteilen bereinigt und die Vibrationsdaten 120 sind im Wesentlichen unabhängig von dem Gravitationsfeld der Erde. Zudem wird ermöglicht, dass die Vibrationsdaten 120 unabhängig einer Orientierung des Sensormoduls 70 im Gravitationsfeld der Erde werden. Der Bandpassfilter filtert in dem Verfahrensschritt 208 die dreikomponentigen Vibrationsdaten 120 nach den Erdbeschleunigungsanteilen. Der Bandpassfilter hat hier eine Filterordnung von zwei, wobei die Frequenz einen Bereich von 100 Hz bis 200 Hz umfasst. In dieser Ausführungsform ist die Frequenz des Bandpassfilters herstellerseitig vordefiniert. Hier umfasst die Steuereinheit 60 den Bandpassfilter.

Der Verfahrensschritt 206 weist einen den Verfahrensschritt 208 folgenden Verfahrensschritt 210 auf. In dem Verfahrensschritt 210 wird eine Vektorsumme der Vibrationsdaten 120 gebildet. Hier bildet die Steuereinheit 60 die Vektorsumme der Vibrationsdaten 120. Durch die Vektorsumme der dreikomponentigen Vibrationsdaten 120 können einkomponentige Vibrationsdaten 120 ermittelt werden. Dies bedeutet, dass das Vibrationsspektrum vektoriell mit seinen drei Raumrichtungen addiert wird, um ein eindimensionales Vibrationsspektrum zu ermitteln. Die einkomponentigen Vibrationsdaten 120 sind unabhängig einer Lage des Saugschlauchs 36 in einer Arbeitsumgebung, einer Orientierung des Saugschlauchs in einer Arbeitsumgebung und einer Hauptschwingungsrichtung der, an das Sauggerät 10 angeschlossenen, Werkzeugmaschine 100. Bei der Vektorsumme in Verfahrensschritt 210 werden die dreikomponentigen Vibrationsdaten 120 vektoriell addiert, um eine orientierungsunabhängige Summenbildung zu ermöglichen. Die Vektorsumme wird in dieser Ausführungsform unter Verwendung der Steuereinheit 60 gebildet. In dem Verfahrensschritt 210 werden zudem die einkomponentigen Vibrationsdaten 120 mit einem herstellerseitig definierten Schwellwert für die einkomponentigen Vibrationsdaten 120 verglichen und es wird das Vergleichsergebnis ausgegeben. Der herstellerseitig definierte Schwellwert bildet hier die Vergleichsdaten. Wenn der Vergleich eines Betrags der Vektorsumme mit dem Schwellwert ergibt, dass die Vektorsumme oberhalb des Schwellwerts liegt, wird als das Vergleichsergebnis ein Startsignal für den Elektromotor 80 ausgegeben. Wenn der Vergleich des Betrags der Vektorsumme mit dem Schwellwert ergibt, dass die Vektorsumme unterhalb des Schwellwerts liegt, wird ein Stoppsignal für den Elektromotor 80 ausgegeben.

Der Verfahrensschritt 206 umfasst auch, dass beim Vergleichen der Vibrationsdaten 120 mit den Vergleichsdaten überprüft wird, ob die Vibrationsdaten 120 innerhalb einer einstellbaren Anzahl an aufeinanderfolgenden einstellbaren Intervallbreiten die Vergleichsdaten zumindest einmalig überschreiten. Die Intervallbreite der Vibrationsdaten 120 ist eine einstellbare Breite eines Intervalls in dem eindimensionalen Vibrationsspektrum. Somit ist hier die Intervallbreite ein einstellbarer Ausschnitt des eindimensionalen Vibrationsspektrums.

Mit Hilfe der einstellbaren Intervallbreiten für die Vibrationsdaten 120 kann ermittelt, insbesondere gezählt, werden, wie oft die erfassten Vibrationsdaten 120 für aufeinanderfolgende, insbesondere konsekutiver, Intervallbreiten die Vergleichsdaten überschreiten. Diese ermittelte, insbesondere gezählte, Anzahl an Überschreitungen der Vibrationsdaten 120 wird dann zur Erzeugung des Vergleichsergebnisses verwendet. Hierbei ist die Intervallbreite der Vibrationsdaten 120 eine einstellbare Breite eines Intervalls in dem Vibrationsspektrum. Dies bedeutet, dass die Intervallbreite ein einstellbarer Ausschnitt des eindimensionalen Vibrationsspektrums ist.

Zudem umfasst der Verfahrensschritt 206 einen Verfahrensschritt 212. Der Verfahrensschritt 212 folgt dem Verfahrensschritt 210. Die Vibrationsdaten 120 werden in dem Verfahrensschritt 212 mit einem einstellbaren Sättigungsbereich eines Sättigungsfilters verglichen, um die Vibrationsdaten 120 nach Vibrationsspitzen zu filtern. Dabei werden die Vibrationsdaten 120 unter Verwendung der Steuereinheit 60 mit dem einstellbaren Sättigungsbereich verglichen. Der Sättigungsbereich ist beispielhaft in einem Bereich von 0,7 g bis 0,95 g.

Weiter weist der Verfahrensschritt 206 einen Verfahrensschritt 214 auf. Der Verfahrensschritt 214 folgt dem Verfahrensschritt 212. In dem Verfahrensschritt 214 wird ein gleitendes Maximum für zumindest eine der einstellbaren Intervallbreiten für die Vibrationsdaten 120 ermittelt. Das Ermitteln des gleitenden Maximums umfasst dabei die Verfahrensschritte eines Festlegens der einstellbaren Intervallbreite, ein Auffinden eines Maximums für die festgelegte, einstellbare Intervallbreite und ein Ausgeben des aufgefundenen Maximums in der festgelegten, einstellbaren Intervallbreite. Das aufgefundene Maximum in der festgelegten, einstellbaren Intervallbreite stellt hier das Vergleichsergebnis dar. Die einstellbare Intervallbreite ist beispielhaft im Bereich von 0,01 s bis 0,05 s.

Eine zeitliche Änderung des gleitenden Maximums der Vibrationsdaten 120 wird in einem Verfahrensschritt 216 ermittelt. Der Verfahrensschritt 206 umfasst den Verfahrensschritt 216, wobei der Verfahrensschritt 216 dem Verfahrensschritt 214 folgt. Die zeitliche Änderung dient zur Überprüfung des Vergleichsergebnisses. Die zeitliche Änderung wird unter Verwendung der Steuereinheit 60 ermittelt.

Eine Häufigkeit der zeitlichen Änderung des gleitenden Maximums der Vibrationsdaten 120 wird in einem Verfahrensschritt 218 ermittelt. Der Verfahrensschritt 206 umfasst den Verfahrensschritt 218. Der Verfahrensschritt 218 folgt dem Verfahrensschritt 216. Hier wird die Häufigkeit der zeitlichen Änderung unter Verwendung eines gleitenden Mittelwertfilters zur weiteren Überprüfung des Vergleichsergebnisses ermittelt. Zudem wird die Häufigkeit unter Verwendung der Steuereinheit 60 ermittelt. Nach einem Vergleich der Häufigkeit mit einer einstellbaren Anzahl an Intervallbreiten, wird das Vergleichsergebnis ausgegeben. Hier ist beispielhaft ein Faktor für eine Intervallbreite des gleitenden Mittelwertfilters zur Intervallbreite des gleitenden Maximums im Bereich von 1 bis 9.

Die Verfahrensschritte 212, 214, 216, 218 bilden eine erste Ausführungsform zum Vergleichen der Vibrationsdaten 120 mit den Vergleichsdaten zur Ermittlung des Vergleichsergebnisses.

In einem Verfahrensschritt 226 wird das Vergleichsergebnis unter Verwendung der Steuereinheit 60 erzeugt und der Elektromotor 80 wird gesteuert. Es ist möglich, dass das Vergleichsergebnis zeitverzögert mittels einer internen Zeitfunktion an den Elektromotor 80 ausgeben wird, sodass der Elektromotor 80 zeitverzögert gesteuert wird. Die interne Zeitfunktion dient zur verzögerten Steuerung des Elektromotors.

Verfahrensschritte 220, 222, 224 bilden eine zweite Ausführungsform zum Auswerten der Vibrationsdaten 120 durch das Vergleichen mit den Vergleichsdaten zur Ermittlung des Vergleichsergebnisses. Der Verfahrensschritt 206 umfasst zusätzlich die Verfahrensschritte 220, 222, 224. Der Verfahrensschritt 226 gibt auch das Vergleichsergebnis aus den Verfahrensschritten 220, 222, 224 aus.

In dem Verfahrensschritt 220 wird das gleitende Maximum für die einstellbare Intervallbreite für die Vibrationsdaten 120 ermittelt, um das Vergleichsergebnis zu ermitteln. Das gleitende Maximum des Verfahrensschritts 220 wird in dem Verfahrensschritt 222 für die einstellbare Anzahl der einstellbaren Intervallbreiten ermittelt. Hier wird die einstellbare Anzahl unter der Verwendung der Steuereinheit 60 ermittelt. In dem Verfahrensschritt 224 wird die ermittelte, einstellbare Anzahl mit einem einstellbaren Schwellwert verglichen und das Vergleichsergebnis wird ermittelt. Der Vergleich der ermittelten, einstellbaren Anzahl mit dem einstellbaren Schwellwert wird unter Verwendung der Steuereinheit 60 durchgeführt. Sobald das Vergleichsergebnis ermittelt wurde, wird das Vergleichsergebnis in dem Verfahrensschritt 226 erzeugt und ausgegeben.

Der Elektromotor 80 wird in einem Verfahrensschritt 228 in Abhängigkeit des Vergleichsergebnisses unter Verwendung der Steuereinheit 60 gesteuert. Dabei umfasst der Verfahrensschritt 228 Verfahrensschritte 230, 232, 234. In dem Verfahrensschritt 230 wird der Elektromotor 80 in Abhängigkeit des Vergleichsergebnisses gestartet. Hierbei wird der Elektromotor 80 so lange betrieben, bis das Vergleichsergebnis eine andere Information umfasst. In dem Verfahrensschritt 232 wird der Elektromotor 80 unter Verwendung der Steuereinheit 60 in Abhängigkeit des Vergleichsergebnisses gestoppt. Zusätzlich kann der Elektromotor 80 in dem Verfahrensschritt 234 für eine Nachlaufzeitspanne in Abhängigkeit des Vergleichsergebnisses betrieben werden. Die Nachlaufzeitspanne ist hier an dem Sauggerät 10 durch den Benutzer einstellbar. Dabei kann die Nachlaufzeitspanne in einem Bereich von 0,1 s bis 5 s sein.

**Patentansprüche**

1. Verfahren (200) zur Steuerung eines Sauggeräts (10), wobei das Sauggerät (10) zumindest einen Elektromotor (80) zumindest zum Erzeugen einer Saugfunktion umfasst, umfassend zumindest Verfahrensschritte

   - Erfassen von Vibrationsdaten (120) an einem Saugschlauch (36) des Sauggeräts (10),
   - Auswerten der Vibrationsdaten (120) durch Vergleichen mit Vergleichsdaten und Erzeugen eines Vergleichsergebnisses,
   - Steuern des Elektromotors (80) in Abhängigkeit des Vergleichsergebnisses,

   **dadurch gekennzeichnet, dass** in einem Verfahrensschritt (208) die Vibrationsdaten (120) mit einer Frequenz zumindest eines Signalfilters zum Herausfiltern von Erdbeschleunigungsanteilen in den Vibrationsdaten (120) gefiltert werden.

2. Verfahren (200) nach Anspruch 1, **dadurch gekennzeichnet, dass** in einem Verfahrensschritt (210) eine Vektorsumme der Vibrationsdaten (120) zur Ermittlung einkomponentiger Vibrationsdaten (120) gebildet wird.

3. Verfahren (200) nach einem der Ansprüche 1 bis 2, **dadurch gekennzeichnet, dass** beim Vergleichen der Vibrationsdaten (120) mit den Vergleichsdaten überprüft wird, ob die Vibrationsdaten (120) innerhalb einer einstellbaren Anzahl an aufeinanderfolgenden einstellbaren Intervallbreiten die Vergleichsdaten zumindest einmalig überschreiten.

4. Verfahren (200) nach Anspruch 3, **dadurch gekennzeichnet, dass** in einem Verfahrensschritt (212) die Vibrationsdaten (120) mit einem einstellbaren Sättigungsbereich eines Sättigungsfilters zur Filterung der Vibrationsdaten (120) nach Vibrationsspitzen verglichen werden.

5. Verfahren (200) nach Anspruch 3 oder 4, **dadurch gekennzeichnet, dass** in einem Verfahrensschritt (214, 220) ein gleitendes Maximum für zumindest eine der einstellbaren Intervallbreiten für die Vibrationsdaten (120) zur Ermittlung des Vergleichsergebnisses ermittelt wird.

6. Verfahren (200) nach Anspruch 5, **dadurch gekennzeichnet, dass** in einem Verfahrensschritt (216) eine zeitliche Änderung des gleitenden Maximums der Vibrationsdaten (120) zur Überprüfung des Vergleichsergebnisses ermittelt wird.

7. Verfahren (200) nach Anspruch 6, **dadurch gekennzeichnet, dass** in einem Verfahrensschritt (218) eine Häufigkeit der zeitlichen Änderung des gleitenden Maximums der Vibrationsdaten (120) unter Verwendung eines gleitenden Mittelwertfilters zur weiteren Überprüfung des Vergleichsergebnisses ermittelt wird.

8. Verfahren (200) nach Anspruch 3 oder 4, **dadurch gekennzeichnet, dass** in einem Verfahrensschritt (222, 224) das gleitende Maximum für die einstellbare Anzahl der einstellbaren Intervallbreiten ermittelt und mit einem einstellbaren Schwellwert zur Ermittlung des Vergleichsergebnisses verglichen wird.

9. Verfahren nach einem der vorhergehenden Ansprüche, **dadurch gekennzeichnet, dass** in einem Verfahrensschritt (205) die erfassten Vibrationsdaten (120) oder das Vergleichsergebnis unter Verwendung einer Kommunikationsverbindung (121) von dem Saugschlauch (36) zu dem Sauggerät (10) übermittelt werden.

10. Verfahren nach einem der vorhergehenden Ansprüche, **dadurch gekennzeichnet, dass** der Elektromotor (80) für eine Nachlaufzeitspanne in Abhängigkeit des Vergleichsergebnisses betrieben wird.

11. Sensormodul (70) zum Durchführen des Verfahrens (200) nach einem der vorhergehenden Ansprüche, wobei das Sensormodul (70) dazu ausgebildet ist, Vibrationsdaten (120) zu erfassen.

12. Sauggerät (10) zum Durchführen des Verfahrens (200) nach zumindest einem der Ansprüche 1 bis 10 mit einem Saugschlauch (36), wobei der Saugschlauch (36) zumindest ein Sensormodul (70) zur Erfassung von Vibrationsdaten (120) umfasst, und mit einer Steuereinheit (60), wobei die Steuereinheit (60) dazu ausgebildet ist, zumindest einen der Verfahrensschritte nach zumindest einem der Ansprüche 1 bis 10 durchzuführen.

**Claims**

1. Method (200) for controlling a suction device (10), the suction device (10) comprising at least one electric motor (80) for at least producing a suction function, comprising at least the method steps of

- capturing vibration data (120) at a suction hose (36) of the suction device (10),
- evaluating the vibration data (120) by comparing them with comparison data and producing a comparison result,
- controlling the electric motor (80) on the basis of the comparison result,

**characterized in that** one method step (208) comprises filtering the vibration data (120) at a frequency of at least one signal filter in order to filter out gravitational acceleration elements in the vibration data (120).

2. Method (200) according to Claim 1, **characterized in that** one method step (210) comprises forming a vector sum for the vibration data (120) in order to ascertain onecomponent vibration data (120).

3. Method (200) according to either of Claims 1 and 2, **characterized in that** the comparison of the vibration data (120) with the comparison data involves checking whether the vibration data (120) exceed the comparison data at least once within a variable number of successive variable interval widths.

4. Method (200) according to Claim 3, **characterized in that** one method step (212) comprises comparing the vibration data (120) with a variable saturation range of a saturation filter in order to filter the vibration data (120) according to vibration peaks.

5. Method (200) according to Claim 3 or 4, **characterized in that** one method step (214, 220) comprises ascertaining a moving maximum for at least one of the variable interval widths for the vibration data (120) in order to ascertain the comparison result.

6. Method (200) according to Claim 5, **characterized in that** one method step (216) comprises ascertaining a change in the moving maximum of the vibration data (120) over time in order to check the comparison result.

7. Method (200) according to Claim 6, **characterized in that** one method step (218) comprises ascertaining a frequentness of the change in the moving maximum of the vibration data (120) over time by using a moving average filter in order to check the comparison result further.

8. Method (200) according to Claim 3 or 4, **characterized in that** one method step (222, 224) comprises ascertaining the moving maximum for the variable number of variable interval widths and comparing it with a variable threshold value in order to ascertain the comparison result.

9. Method according to one of the preceding claims, **characterized in that** one method step (205) comprises transmitting the captured vibration data (120) or the comparison result from the suction hose (36) to the suction device (10) by using a communication connection (121).

10. Method according to one of the preceding claims, **characterized in that** the electric motor (80) is operated for a run-on period on the basis of the comparison result.

11. Sensor module (70) for carrying out the method (200) according to one of the preceding claims, the sensor module (70) being designed to capture vibration data (120).

12. Suction device (10) for carrying out the method (200) according to at least one of Claims 1 to 10, having a suction hose (36), the suction hose (36) comprising at least one sensor module (70) for capturing vibration data (120), and having a control unit (60), the control unit (60) being designed to carry out at least one of the method steps according to at least one of Claims 1 to 10.

**Revendications**

1. Procédé (200) permettant de commander un dispositif d'aspiration (10), dans lequel le dispositif d'aspiration (10) comprend au moins un moteur électrique (80) au moins pour générer une fonction d'aspiration, comprenant au moins les étapes de procédé consistant à

   - détecter des données de vibration (120) au niveau d'un tuyau d'aspiration (36) du dispositif d'aspiration (10),
   - évaluer les données de vibration (120) en les comparant avec des données de comparaison, et en générant un résultat de comparaison,
   - commander le moteur électrique (80) en fonction du résultat de comparaison,

   **caractérisé en ce que** dans une étape de procédé (208), les données de vibration (120) sont filtrées avec une fréquence d'au moins un filtre de signal pour éliminer par filtrage des parts d'accélération gravitationnelle des données de vibration (120).

2. Procédé (200) selon la revendication 1, **caractérisé en ce que** dans une étape de procédé (210), une somme vectorielle des données de vibration (120) est formée pour établir des données de vibration (120) à une composante.

3. Procédé (200) selon l'une quelconque des revendications 1 à 2, **caractérisé en ce que** lors de la comparaison des données de vibration (120) avec les données de comparaison, on vérifie si les données de vibration (120) dépassent les données de comparaison au moins une fois à l'intérieur d'un nombre réglable de largeurs d'intervalle réglables consécutives.

4. Procédé (200) selon la revendication 3, **caractérisé en ce que** dans une étape de procédé (212), les données de vibration (120) sont comparées avec une plage de saturation réglable d'un filtre de saturation pour filtrer les données de vibration (120) selon des pics de vibration.

5. Procédé (200) selon la revendication 3 ou 4, **caractérisé en ce que** dans une étape de procédé (214, 220), un maximum mobile pour au moins l'une des largeurs d'intervalle réglables est établi pour les données de vibration (120) afin d'établir le résultat de comparaison.

6. Procédé (200) selon la revendication 5, **caractérisé en ce que** dans une étape de procédé (216), une variation temporelle du maximum mobile des données de vibration (120) est établie pour vérifier le résultat de comparaison.

7. Procédé (200) selon la revendication 6, **caractérisé en ce que** dans une étape de procédé (218), une fréquence de la variation temporelle du maximum mobile des données de vibration (120) est établie en utilisant un filtre de moyenne mobile pour une vérification supplémentaire du résultat de comparaison.

8. Procédé (200) selon la revendication 3 ou 4, **caractérisé en ce que** dans une étape de procédé (222, 224), le maximum mobile pour le nombre réglable des largeurs d'intervalle réglables est établi et comparé avec une valeur seuil réglable afin d'établir le résultat de comparaison.

9. Procédé selon l'une quelconque des revendications précédentes, **caractérisé en ce que** dans une étape de procédé (205), les données de vibration (120) ou le résultat de comparaison établi sont transmis du tuyau d'aspiration (36) au dispositif d'aspiration (10) en utilisant une liaison de communication (121).

10. Procédé selon l'une quelconque des revendications précédentes, **caractérisé en ce que** le moteur électrique (80) fonctionne pendant une période d'arrêt en fonction du résultat de comparaison.

11. Module de capteur (70) pour exécuter le procédé (200) selon l'une quelconque des revendications précédentes, dans lequel le module de capteur (70) est réalisé pour détecter des données de vibration (120).

12. Dispositif d'aspiration (10) permettant d'exécuter le procédé (200) selon au moins l'une des revendications 1 à 10, comprenant un tuyau d'aspiration (36), dans lequel le tuyau d'aspiration (36) comprend au moins un module de capteur (70) permettant de détecter des données de vibration (120), et une unité de commande (60), dans lequel l'unité de commande (60) est réalisée pour exécuter au moins l'une des étapes de procédé selon au moins l'une des revendications 1 à 10.

Fig. 1

EP 4 090 213 B1

Fig. 2

EP 4 090 213 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014008087 A
- DE 102010040336 A1